# EUROPÄISCHE PATENTSCHRIFT

(11) **EP 0 688 304 B1**
(45) Veröffentlichungstag und Bekanntmachung des Hinweises auf die Patenterteilung: **07.01.1998**
(21) Anmeldenummer: 94908962.7
(22) Anmeldetag: 09.03.1994
(51) Int. Cl.: C02F 3/30

(54) **VERFAHREN ZUR BIOLOGISCHEN ABWASSERREINIGUNG MIT INTEGRIERTER PUFFERUNG**
PROCESS FOR BIOLOGICAL WATER PURIFICATION WITH INTEGRATED BUFFERING
PROCEDE D'EPURATION BIOLOGIQUE D'EAUX USEES, A SYSTEME DE TAMPONNAGE INTEGRE

(30) Priorität: 09.03.1993 DE 4307288
(43) Veröffentlichungstag der Anmeldung: 27.12.1995
(73) Patentinhaber: ÖKOSERVICE GESELLSCHAFT FÜR UMWELTANALYTIK UND KLÄRANLAGENBETREUUNG GMBH, 73770 Denkendorf (DE)
(72) Erfinder: ZINK, Jürgen, D-70599 Stuttgart (DE)
(74) Vertreter: Klunker . Schmitt-Nilson . Hirsch
(86) Internationale Anmeldenummer: DE9400253
(87) Internationale Veröffentlichungsnummer: WO9420426

(56) Entgegenhaltungen:
- EP-A- 0 396 142
- DE-A- 2 739 126
- FR-A- 2 246 499
- GB-A- 1 106 561
- US-A- 3 886 065

## Beschreibung

Die Erfindung betrifft ein Verfahren zur biologischen Abwasserreinigung gemäß Oberbegriff des Anspruchs 1.

Man kann vorsehen, daß alle Verfahrensstufen, vorzugsweise auch der Schlammstapelraum, eingestaut werden und daß der Abzug aus der Nachklärkammer über einen Unterwasserablauf erfolgt.

Bekannte Kläranlagen zur biologischen Abwasserreinigung bestehen aus einer der Vorklärung dienenden Kammer, in die der Zulauf des zu reinigenden Abwassers erfolgt, und einer weiteren mit dieser Kammer verbundenen, der biologischen Behandlung dienenden belüfteten Kammer, die wiederum mit einer der Nachklärung dienenden weiteren Kammer verbunden ist. Das gereinigte Abwasser wird über einen Kontrollschacht einem Vorfluter zugeführt.

Bei vielen häuslichen und industriellen Kläranlagen fällt das Abwasser mehr oder weniger häufig stoßweise an. Zu nennen sind beispielsweise Anlagen von Ausflugsgaststätten, Campingplätzen, Hotels, Feriensiedlungen, im häuslichen Bereich und obst-und gemüseverarbeitende Kampagnebetriebe im industriellen Bereich.

Werden die Kläranlagen auf den stoßweisen Abwasseranfall gezielt konzipiert, so entstehen erhebliche Mehrkosten durch die größere Dimensionierung, insbesondere bei den nach der Hydraulik auszulegenden Verfahrensstufen (Vorklärung und Nachklärung). Außerdem entstehen erhöhte Stromkosten beim Betrieb dieser Anlagen.

Bei diesen Anlagen besteht in der Phase der schwachen Belastung die Gefahr, daß die Reinigungsleistung der biologischen Stufe durch Unterbelastung beeinträchtigt wird.

Es ist bekannt, daß zum Auffangen von Spitzenbelastungen vor der Kläranlage ein Pufferbecken installiert wird, das diese Belastungsstöße speichert und dosiert der nachfolgenden biologischen Stufe weitergeben soll.

Diese Anordnung hat jedoch den Nachteil, daß das Abwasser im Pufferbecken anfaulen kann, wodurch erhebliche Geruchsbeeinträchtigungen entstehen können und die nachfolgende biologische Reinigung beeinträchtigt wird.

Eine Belüftung des im Pufferbecken gespeicherten Abwassers ist aufwendig, da aufgrund des variierenden Wasserspiegels und der damit sich ständig ändernden Druckverhältnisse für die Belüftung ein Anschluß an das Belüftungssystem der Kläranlage nicht möglich ist, sondern ein getrenntes Aggregat betrieben werden muß.

Ein weiterer Nachteil des vorgeschalteten Pufferbeckens besteht darin, daß Rohabwasser in die nachfolgende Kläranlage gefördert werden muß. Pumpen, die Rohabwasser fördern bzw. die im Abwasser enthaltenen Grobstoffe zerkleinern, sind kostenintensiv und haben darüber hinaus den Nachteil, daß sie nur mit einer relativ großen Förderleistung betrieben werden können, die das Nachklärbecken der biologischen Stufe hydraulisch stark belasten.

Eine Milderung dieser Belastung dahingehend, daß die Belastungsspitzen nur kurzzeitig auftreten, ist nur dann gegeben, wenn die Laufzeit der Pumpen sehr kurz gewählt ist. Dies ist jedoch der Lebensdauer der Förderpumpe stark abträglich.

Eine weitere, bekannte Pufferungsmöglichkeit besteht darin, die mechanische Vorreinigung, beispielsweise in Form eines Emscherbrunnens oder einer Mehrkammergrube, aufzustauen, wobei die Förderung in die nachfolgende biologische Stufe durch ein Schöpfzellenrad od. dgl. erfolgt.

Diese Pufferung hat den Nachteil, daß die lange Verweilzeit während des Pufferungsvorgangs in der mechanischen Vorreinigung zu Anfaulvorgängen des Abwassers führt, was die biologische Reinigung beeinträchtigt und ebenfalls zu Geruchsbelästigungen führen kann.

Ein großer Nachteil besteht auch darin, daß nur die relativ kleine Fläche der mechanischen Vorreinigung eingestaut werden kann, so daß sich bei vergleichbarer Stauhöhe nur ein geringes Puffervolumen ergibt.

Nach der US-A-3 886 065 ist ferner ein Verfahren zur Abwasserreinigung mit integrierter Pufferung bekannt mit mindestens zwei Belebungskammern sowie einer Nachklärkammer mit Entnahme des gereinigten Abwassers.Die Belebungskammern weisen bei dieser bekannten Anordnung eine Belüftungseinrichtung auf, und der Nachklärkammer wird in vergleichmäßigter Form über eine Abzugseinrichtung Abwasser entzogen.

Der Erfindung liegt die Aufgabe zugrunde, ein Verfahren aufzuzeigen, nach dem in einer vom Bauvolumen her nur für eine mittlere Mengenbelastung ausgelegten Anlage zur biologischen Abwasserreinigung auch eine Reinigung von spitzenanfallbedingten größeren Mengen an Abwasser bei besserer Reinigungsqualität möglich ist mit kostengünstiger und wartungsfreier Sauerstoffeintragsregelung und integrierter Pufferung.

Zur Lösung dieser Aufgabe wird das Verfahren erfindungsgemäß so geführt, wie im kennzeichnenden Teil des Anspruchs 1 angegeben. Man bedient sich einer Niveausteuerung und der Umschaltung von der Normalbelüftung zur Ruhebelüftung in Abhängigkeit des Wasserspiegels. Der Abzug des gereinigten Abwassers kann entweder durch eine Klarwasserpumpe oder durch ein Drosselorgan erfolgen. Fließt der Kläranlage mehr Abwasser zu als abgezogen wird, so steigt der Wasserspiegel gleichmäßig sowohl im Vorklärbecken als auch im Belebungs- und Nachklärbecken an. Ist ein getrennter Schlammstapelraum angeordnet, so kann dieser über den Zufluß vom Vorklärbecken ebenfalls aufgestaut werden.

Fällt weniger Abwasser an als aus der Kläranlage abgezogen wird, so sinkt der Wasserspiegel im gesamten System wieder ab. Bei Erreichen des unteren Grenzwasserspiegels, der sich auf dem Niveau des Schwimmschlammabzuges geringfügig, z.B. 20 cm, über der Unterwasserablaufrinne befinden kann, wird die Abzugspumpe für das geklärte Abwasser aus dem Nachklärbecken beispielsweise schwimmer- oder elektrodengesteuert abgeschaltet. Im Falle des Einbaus eines Drosselorganes wird dieses so installiert, daß bei Erreichen des unteren Grenzwasserspiegels ein Zufluß unterbleibt.

Das erfindungsgemäße Verfahren hat den Vorteil, daß der Großteil des Abwassers gleich der biologischen Behandlung zugeführt wird, so daß der Abbauvorgang bereits stattfindet und keine Geruchsprobleme entstehen können. Außerdem ist das Puffervolumen durch Nutzung sämtlicher bzw. weitgehend aller Becken wesentlich größer als lediglich beim Aufstau der mechanischen Vorreinigungsstufe.

Da der Schwimmschlammabzug ständig - intermittierend - in Betrieb ist und dieser sauerstoffhaltiges Wasser nebst Schwimmschlamm in die Vorklärung pumpt, wird das sich in der Vorklärung befindliche Abwasser aufgefrischt, so daß Faulvorgänge unterdrückt werden. Zusätzlich zum bereits in der Anlage bereitgestellten Puffervolumen kann eine weitere Speichermöglichkeit von Abwasser dadurch geschaffen werden, daß bei Erreichen des maximalen Wasserspiegels das Abwasser über eine Überlaufleitung, die vorzugsweise in der letzten Kammer der Vorklärung angeordnet ist, in eine geschlossene Grube fließt, wobei der Betreiber beispielsweise über eine Schwimmersteuerung mit Alarmeinrichtung ab einem gewissen Füllstandsniveau informiert wird.

Diese zusätzliche Puffermöglichkeit bietet sich vor allem dann an, wenn dem Vorfluter lediglich eine genau definierte Fracht- bzw. Wassermenge zugeleitet werden darf und wenn extreme Spitzenbelastungen der Anlage auftreten können. Dies kann beispielsweise bei Sommerfesten oder Jubiläen bei Vereinsheimen, bei Zufließen von Regen- oder Fremdwasser oder bei Ausfluggaststätten an Schönwetter-Feiertagen der Fall sein.

Bei der biologischen Abwasserreinigung nach dem Belebungsverfahren muß zur Unterstützung der mikrobiellen Tätigkeit Luft, Sauerstoff oder Wasserstoffperoxid in das Belebungsbecken eingemischt werden. Die Menge des Eintrags der vorgeschriebenen Stoffe ist weitgehend abhängig vom Zufluß der Schmutzfracht in die Abwasserreinigungsanlage. Im Tagesmittel gesehen ist in den meisten Fällen die Schmutzfracht proportional zum Mengenzufluß des Abwassers, insbesondere wenn die Kanalisation im Trennsystem verlegt ist.

Zur Regelung des Sauerstoffeintrags bei größeren, z.B. kommunalen Kläranlagen hat sich die Messung mit Sauerstoffelektroden durchgesetzt. Diese Elektroden sind jedoch wartungsaufwendig und bedürfen einer ständigen Überprüfung, die nur gewährleistet ist, wenn die Kläranlage ständig von einem Fachmann überwacht und gewartet wird.

Außerdem sind die hohen Kosten der Regelungsanlage nachteilig.

Es sind daher in den Ansprüchen 1 bis 4 Verfahrensschritte aufgezeigt, mit denen eine einfache, der Belastung der Anlage entsprechende Sauerstoffversorgung sichergestellt werden kann, wobei die Grundlastbelüftung auch erfolgt, wenn kein Abwasser zufließt.

Nach diesen Ansprüchen wird bei Erreichen des unteren Grenzwasserspiegels, der gleichzeitig eine schwache Belastungsphase der Anlage signalisiert, beispielsweise über eine Schwimmer- oder Niveauelektroden-Steuerung automatisch auf eine intermittierend betriebene Schwachlast- oder Ruhephasenbelüftung umgeschaltet. Bei Anstieg des Niveaus oder des Wasserspiegels wird zeitverzögert oder in Abhängigkeit vom Erreichen des Niveaus, beispielsweise über ein Verzögerungsrelais wieder auf die normale Belüftungssteuerung umgeschaltet. Je häufiger und länger das Erreichen des unteren Grenzwasserspiegels stattfindet, desto häufiger sind die Ruhephasenintervalle und entsprechend geringer der Sauerstoffeintrag. Da vorgesehen sein kann, die gesamte Anlage im Aufstau zu betreiben, und die Aufstauung eine Funktion der Wassermenge ist, ist eine solche Schwimmerregelung möglich.

Die Belüftungsintervalle der Grundlaststeuerung können zeitlich von solcher Dauer gewählt werden, daß der Sauerstoffgehalt auf den Wert Null zurückgeht und über eine längere Dauer in diesem Bereich verweilt, so daß eine gezielte Denitrifikation, die das vollständige oder weitgehende Fernbleiben von Sauerstoff zur Voraussetzung hat, gegeben ist. So kann z.B. die Normalbelüftung während 2/3 der Zeit erfolgen, so daß während dieser Zeit der Sauerstoffeintrag zur Nitrifikation erfolgt. Über die Grundlastbelüftung wird damit nur eine solche Sauerstoffmenge eingetragen, die für die Atmungsaktivität der Bakterien, nicht aber zu deren Vermehrung ausreicht, so daß auf jeden Fall die Nitrifikation erfolgt.

Eine zusätzliche Möglichkeit zur gleichartigen, optimierten Steuerung des Belebungsverfahrens ist dadurch gegeben, daß bei Erreichen des unteren Grenzwasserspiegels Belebtschlamm aus dem biologischen System entzogen wird und in einen externen Schlammspeicher geleitet wird. Bei geringer Belastung der Anlage ist es vorteilhaft, den Schlammgehalt durch Herausnehmen eines Anteils des Belebtschlamms zu reduzieren, da sich sonst in diesem Zustand bakterienfressende Organismen stark vermehren könnten und das biologische System so beeinträchtigen, daß bei starker Belastung nicht mehr die volle biologische Aktivität und damit Abbaumöglichkeit gegeben ist.

Steigt der Wasserspiegel infolge stärkeren Zuflusses in der Anlage an, so wird beispielsweise über ein schwimmer- oder elektrodengesteuertes Signal der umgekehrte Vorgang eingeleitet, d.h. der Schlamm aus dem Speicherbecken wird kontinuierlich, vorzugsweise über eine Pumpe, so lange dem biologischen System zugeführt, bis wiederum ein tieferer Wasserspiegel, beispielsweise 1/4 des Einstauvolumens, erreicht wird. Dann wird wiederum über die Steuerung die Förderung des Speicherschlammes eingestellt.

Je höher der Wasserspiegel ansteigt und je höher also die Belastung der Anlage, desto mehr Schlamm wird aus dem Schlammspeicher gefördert.

Eine weitere Möglichkeit zur optimierten Regelung der erfindungsgemäßen biologischen Anlage besteht darin, daß zum Zwecke der Phosphatelimination Fällungsmittel mengenproportional zugegeben werden können. Dies kann beispielsweise dadurch geschehen, daß entsprechend der Häufigkeit der Umschaltung von Normalbelüftung auf Grundlastbelüftung eine Dosierpumpe Fällungsmittel vorzugsweise in das Belebungsbecken fördert, wobei dieses infolge der Durchmischung der durch den Lufteintrag entstehenden Wasserwalze optimal verteilt wird. Eine weitere Möglichkeit des mengenproportionalen Eintrags von Fällungsmitteln besteht darin, daß im Falle der Installation einer Abzugspumpe aus dem Nachklärbecken die Laufzeit der Dosierpumpe entsprechend der Laufzeit dieser Abzugspumpe mittels elektrischer Koppelung angepaßt wird.

Durch das erfindungsgemäße Verfahren des kontinuierlichen Abwasserabzugs über eine Unterwasser Ablaufrinne vorzugsweise im 24 h-Mittel und den Betrieb der Anlage im Aufstau ergeben sich, verbunden mit getrennter Belebtschlamm-Zwischenspeicherung wesentliche Vorteile, die es erst ermöglichen, relativ kleine Anlagen auch zum Reinigen von Spitzenmengenbelastungen einzusetzen.

Es hat sich gezeigt, daß durch die getrennte Speicherung des Schlammes eine schnelle Reaktion auf Belastungsspitzen möglich ist durch Schlammzufuhr am Zulauf der Belebungskammer, so daß ausreichend Biomasse für den Reinigungsvorgang vorhanden ist. Bei stärkerem Anfall kann dabei über den Schwimmerschalter das Einpumpen des Schlammes mit einer Verzögerung erfolgen. Mit diesem Verfahren wird damit bei geringerem Energieverbrauch eine Verbesserung der Reinigung durch Verbesserung der Lebensbedingungen für Nitritatmer und Nitratatmer erreicht, während bei der üblichen Lagerung mit Luft die Gefahr einer Vermehrung der Mikrobenfresser gegeben ist.

In den Unteransprüchen sind Merkmale enthalten, die auch alleine oder in Kombination eine Erfindung darstellen.

In zwei Ausführungsbeispielen wird eine Anordnung zur Durchführung des erfindungsgemäßen Verfahrens vereinfacht und schematisch dargestellt und das erfindungsgemäße Verfahren beschrieben. Dabei enthält diese Beschreibung auch Weiterführungen der Erfindung.
Es zeigt:
- Fig. 1: eine Gesamtanlage in Draufsicht;
- Fig. 2: einen Längsschnitt an der Stelle A-A der Fig. 1;
- Fig. 3: einen Längsschnitt an der Stelle B-B der Fig. 1;
- Fig. 4: als Detail eine Ablaufvorrichtung mit Unterwasserablaufstutzen nach Fig. 1 gemäß Schnitt A-B der Fig. 5;
- Fig. 5: die Ablaufvorrichtung nach Fig. 4 in Draufsicht.
- Fig. 6: ein Detail der Ablaufvorrichtung gemäß Schnitt C-B der Fig. 5
- Fig. 7: eine Variante als Gesamtanlage mit einem Schlammstapelraum;
- Fig. 8: einen Schnitt an der Stelle C-C in Fig. 7
- Fig. 9: einen Schnitt an der Stelle D-D in Fig. 7.

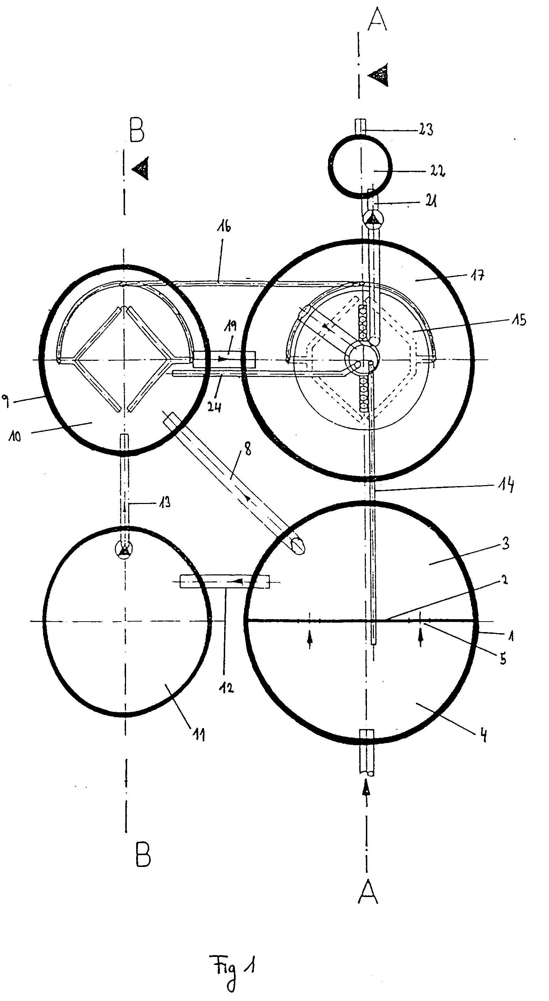

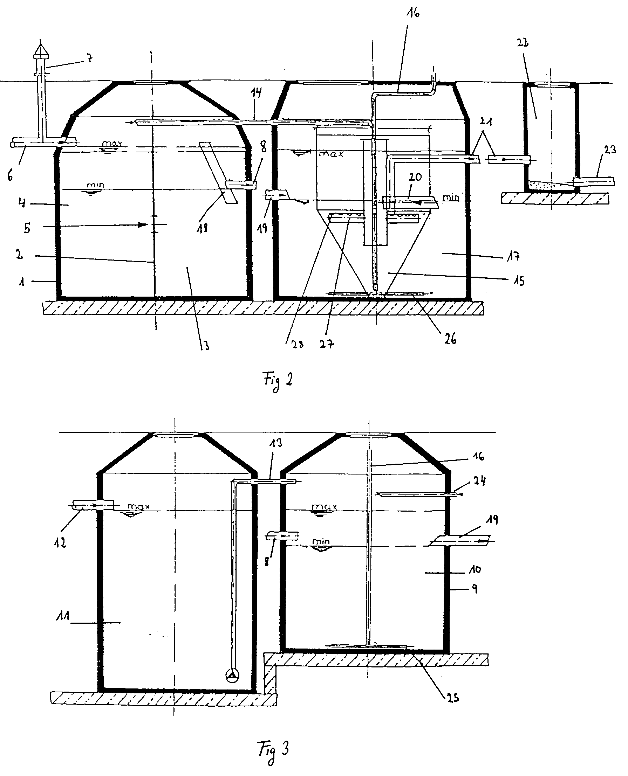

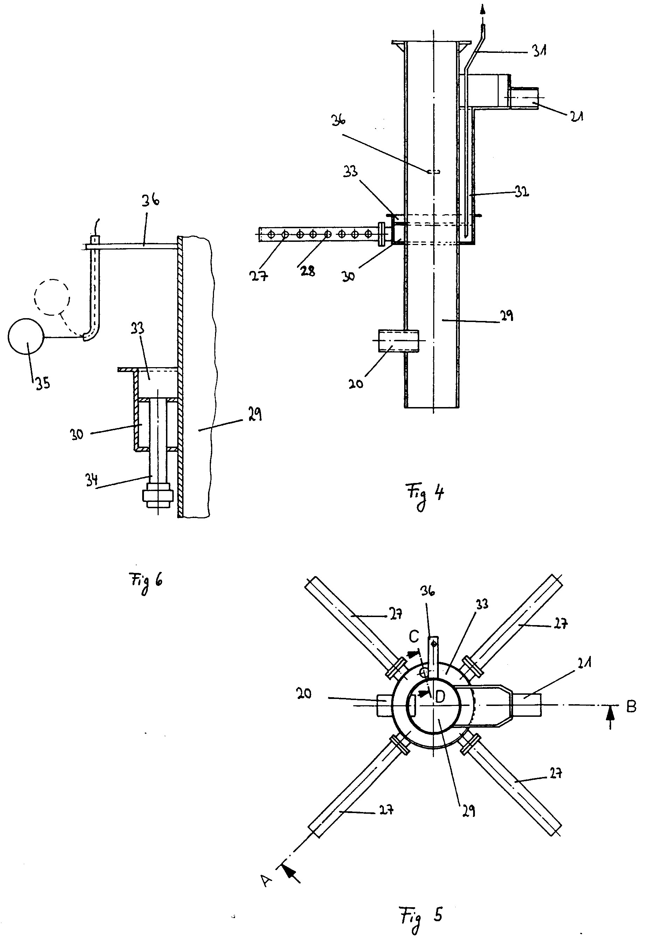

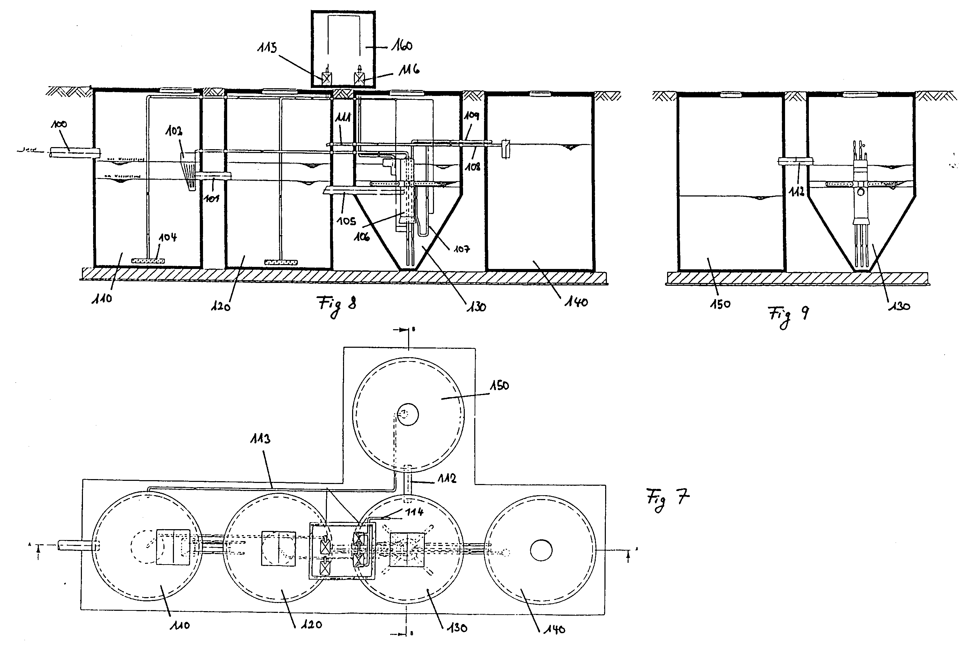

Die Fig. 1 mit den Fig. 2 und 3 zeigen die Gesamtanlage der bevorzugten Variante mit einer Vorklärung oder mechanischen Vorreinigung (Sedimentation, Aufschwimmen) in dem Behälter 1, der durch eine Trennwand 2 in die beiden Kammern 3 und 4 unterteilt ist. Die Trennwand 2 weist Durchtrittsöffnungen 5 zum Durchtritt von Abwasser auf. Dieses Abwasser wird über den Zulauf 6 zugeführt. In den Zulauf 6 ist in bekannter Weise eine Enlüftung 7 angebracht. Aus der Kammer 3 der Vorklärung wird vorgeklärtes Abwasser über eine Überlaufleitung 8 dem Behälter 9 (Belebung I) zugeführt und ragt in die Belebungskammer 10. Gemäß der vorliegenden Erfindung ist noch eine geschlossene Grube 11 mit der Kammer 3 über einen Notüberlauf 12 verbunden. Diese Grube 11 ist als Ausbaureserve vorgesehen, und aus ihr erfolgt ein Abpumpen in die Belebungskammer 10 über eine Leitung 13. Dieses Abpumpen erfolgt automatisch bei dem Mindest-Abwasserstand in der Belebungskammer 10. Für den Fall, daß ein Abpumpen von Abwasser aus der Grube 11 in die Belebungskammer 10 nicht möglich ist und eine vorgegebene Füllhöhe überschritten wird - und damit die Gefahr einer Rückströmung in die Kammer 3 gegeben ist - erfolgt z.B. schwimmergesteuert ein Alarm, so daß in diesem Fall die Grube 11 anderweitig zumindest teilgeleert werden kann. Durch die Anordnung dieser Grube 11 kann ein besonders großer Stoßanfall von Abwasser abgefangen werden. Dies ist z.B. dann der Fall, wenn z.B. ein Vereinshaus die Woche über nur einen geringen Anfall von Abwasser hat, aber am Wochenende einen extrem hohen Anfall. Dann kann der Fall eintreten, daß in der Kammer 3 der Maximalstand erreicht wird und ein Überströmen in die Grube 11 erfolgt.

Die mechanische Vorreinigung in der Kammer 4 ist auch für die Aufnahme von Überschußschlamm vorgesehen. Diese Zufuhr erfolgt über eine Leitung 14 aus der Nachklärung in der Kammer 15.

Die Kammer 10 als Belebungskammer muß belüftet werden, um die für den biologischen Abbau optimalen Bedingungen für die abbauenden Bakterien zu schaffen, wobei insbesondere in der Nachklärung in der Kammer 15 das Verhältnis der Sinkgeschwindigkeit der Schlammflocken, an die sich die Bakterien in der Belebungsstufe anlagern, zu der Beschichtung so gewählt sein muß, daß die Sedimentationszeit ausreichend ist. Der sich an der Trichterspitze der Nachklärkammer 15 absetzende Schlamm wird ständig über die Rücklaufschlammleitung 24 in die Belebungskammer 10 gepumpt. Die Belüftung der Kammer 10 erfolgt über eine Belüftungsleitung 16 mit einer nicht dargestellten Lufteinspeisung zwischen den Kammern 10 und 15. Diese Belüftungsleitung 16 führt in bekannter Weise die Luft zu einem am Boden der Kammer 10 bzw. 15 und der Kammer 17 angeordneten Belüfter 26. Diese Luftzufuhr 16 dient gleichzeitig als Luftheber dem Abzug und der Zuteilung des Belebtschlammes in der Kammer 4 über die Überschußschlammleitung 14 sowie Rücklaufschlamm in die Kammer 10 über die Leitung 24.

Die Zufuhr des Abwassers aus der Kammer 3 in die Kammer 10 erfolgt wie gezeigt über die Überlaufleitung 8, die im Bereich der Kammer am Eintritt ein Tauchrohr 18 aufweist. Dieses Tauchrohr 18 ist beiderseits offen, wobei die über dem maximalen Abwasserspiegel liegende Öffnung als Reinigungsöffnung dient und durch die untere Öffnung das Abwasser in die Leitung 8 eintritt.

Die Abwasserzuführung aus der Kammer 10 in die Kammer 17 erfolgt über eine Überströmleitung 19 und die Zuführung in die Nachklärkammer 15 über die Überströmleitung 20. Über eine weitere Leitung 21 wird das Wasser dem Kontrollschacht 22 zugepumpt oder über eine Drossel zugeleitet. Dieser Kontrollschacht 22 ist über die Leitung 23 mit einem Vorfluter verbunden.

Von besonderer Bedeutung für das erfindungsgemäße Verfahren ist die ebenfalls erfindungswesentliche Ausgestaltung der Kammern 15 und 17, von denen wesentliche Details in den Figuren 4, 5 und 6 dargestellt sind.

Die Kammer 17 als Belebungskammer II ist als Ringraum um die Kammer 15 als Nachklärkammer angeordnet, d.h. es handelt sich um eine konzentrische Anordnung. Während bei den bekannten Anordnungen der Schwimmschlamm, der natürlich nicht in den Wasserablauf gelangen darf, in einem Raum gesammelt wurde, der sich etwa als eingeschobenes Quadrat in einem Kreis darstellt und bei dem sich daher durch die Ecken des Quadrates als Begrenzungen mehrere einzelne Schlammräume ergaben und der Abzug des Schlammes aus diesen Räumen sehr aufwendig ist, erfolgt bei dieser erfindungsgemäßen Anordnung ein zentraler Ablauf. Die Nachklärkammer 15 ist derart aufgebaut, daß sich an einen oberen, zylinderförmigen Abschnitt ein unterer kegel- bzw. kegelstumpfförmiger Abschnitt anschließt, der auf dem Boden aufsitzt. Die Belüftung erfolgt bei der Kammer 17 am Boden über den Belüfter 26 und in der Kammer 10 über den Belüfter 25.

Erfindungswesentlich ist ferner der zentrale Ablauf, der über Ablaufrohre 27 mit Abzugsöffnungen 28 (Fig. 4) erfolgt und als Unterwasserabzug ausgebildet ist. Die Fig. 4 zeigt die Ablaufvorrichtung mit den Unterwasserablaufrohren 27, die wie in Fig. 5 gezeigt, sternförmig an den Schlammabzug 29 angeordnet sind. Diese Fig. 4 zeigt ferner den Zulauf 20 in den Einlaufzylinder 29. Die Ablaufrohre 27 enden in einem Sammler 30, aus dem der Klarwasserabzug über das Saugrohr 31 zu dem Kontrollschacht 22 erfolgt. Dieses Saugrohr 31 ist in einem Steigschacht 32 angeordnet. Oberhalb des Sammlers 30 ist eine Schwimmschlammrinne 33 angeordnet, aus der der Schwimmschlamm über einen Luftheber abgezogen wird. In der Fig. 6 ist neben dem Schwimmschlammabzug 34 (mittels Luftheber) noch ein schwimmschalter 35 mit einem Gestänge 36 dargestellt, über den der Klarwasserabzug abgeschaltet wird, wenn in der Anlage der untere Grenzwasserspiegel erreicht wird. Wenn das Wasser wieder ein vorgegebenes Niveau erreicht hat, schaltet der Klarwasserabzug wieder ein.

Erfindungswesentlich bei dieser Anlage ist, daß in der Nachklärkammer 15 durch die Unterwasserablaufrinne 30 (Sammler) das Abwasser kontinuierlich, vorzugsweise im 24 h-Mittel abgezogen wird. Dazu ist es erforderlich - nach dem Gesetz der kommunizierenden Rohre - alle Kammern auf gleiche Höhe aufzustauen. Damit ist es möglich, den 24 h-Anfall, der mit Spitzen in z.B. 10 h am Tag anfällt, gleichmäßig mit 1/24 pro h zu klären. Dazu wird bei dem kontinuierlichen Abzug beispielsweise der Spitzenanfall bei Tag aufgestaut und nachts korrigiert. Das ist deshalb möglich, weil durch das gleichmäige Aufstauen über alle Kammern auch bei kleineren Anlagen ein ausreichendes Stauvolumen zur Verfügung steht. Ein weiterer Vorteil ist die gleichmäßige und hydraulische Belastung des Nachklärbeckens, was zu einer wesentlichen Verbesserung der biologischen Wirksamkeit führt (Reduzierung der absetzbaren Stoffe).

In den Fig. 7, 8 und 9 ist eine Variante dargestellt mit einem Auffangbehälter 150, der über einen Notüberlauf 112 mit der Nachklärkammer 130 verbunden ist. Ferner zeigen diese Figuren die aufgesetzte Gerätebox 160 mit den für den Ablauf der Reinigung erforderlichen Gebläsen 115 und Pumpen 116. Bei dieser Variante fließt das Rohwasser (Abwasser) direkt über den Zulauf 100 dem ersten Belebungsbecken 110 zu. Am Überlauf 101 zum zweiten Belebungsbecken 120 sind Rechenstäbe 102 angeordnet, die Grobstoffe zurückhalten. Die Rechenstäbe werden von der durch die Belüftung 104 entstehende Wasserwalze von unten angeströmt und ständig freigespült. Über den Ablauf 105 gelangt der Belebtschlamm in die wie in Variante 1 beschriebene Nachklärung. Die kreisförmig um den Einlaufzylinder 106 herum installierte Schwimmschlamm-Abzugsvorrichtung 107 (bzw. 34 in Fig. 6) fördert diesen mittels Luftheber über die Rohrleitung 108 ebenso in den Schlammstapelraum wie der Luftheber den Überschußschlamm aus der Sohle des Nachklärbeckens 130 über die Rohrleitung 109. Trübwasser kann über die Rohrleitung 111 aus dem Schlammstapelraum 140 wieder in die zweite Belebung 120 rückgeführt werden. Bei nicht dargestelltem Einstauen der Kammer 140 über die Kammer 130 wird das Rückströmen bei sinkendem Wasserspiegel in der Kammer 130 über eine Rückschlagklappe verhindert. Dasselbe gilt für das Einströmen von Wasser der Kammer 120 in die Kammer 140 in umgekehrter Weise.

Darüber hinaus ist für kurzfristige große Wassermengen ein Notüberlauf 112 in den Auffangbehälter 150 vorgesehen. Von dort wird das schwimmschlammhaltige Wasser über die Leitung 113 in die erste Belebung 110 zurückgeführt. Das Klarwasser wird über die Leitung 114 in den nicht dargestellten Vorfluter gepumpt.

## Patentansprüche

1. Verfahren zur biologischen Abwasserreinigung mit integrierter Pufferung, bei dem Verfahrensstufen eingestaut werden, mit mindestens einer Belebungskammer (10) sowie einer Nachklärkammer (15) mit Entnahme des gereinigten Abwassers, wobei die Belebungskammer (10) eine Belüftungseinrichtung aufweist und ihr Rücklaufschlamm aus der Nachklärkammer (15) zugeführt wird und wobei eine Abzugseinrichtung (21, 27, 30) für gereinigtes Abwasser eine Niveausteuerung mit einem Schaltelement (35) aufweist und der Nachklärkammer (15) in vergleichmäßigter Form, vorzugsweise über 24 Stunden gleichmäßig gereinigtes Abwasser mittels der Abzugseinrichtung (21, 27, 30) entzogen wird,
dadurch gekennzeichnet,
daß bei absinkendem Wasserspiegel eine Umschaltung von der Normalbelüftung zur Ruhebelüftung erfolgt, wobei wahlweise längere Pausen ohne Belüftung oder kürzere Laufzeiten der Belüftung durch das Umschalten eingeleitet werden.

2. Verfahren nach Anspruch 1, dadurch gekennzeichnet daß über die Pausenintervalle bzw. die Laufzeitintervalle der Grundlaststeuerung der Sauerstoffgehalt auf Null zurückgefahren und solange auf diesem Wert gehalten wird bis eine vorgegebene Denitrifikation erfolgt ist.

3. Verfahren nach einem der Ansprüche 1 oder 2, dadurch gekennzeichnet, daß beim Erreichen des unteren Grenzwasserspiegels Belebtschlamm wahlweise aus einer der Kammern (110, 120, 130) entzogen und einem Belebtschlammzwischenspeicher (nicht dargestellt) zugeführt wird.

4. Verfahren nach einem der Ansprüche 1, 2 oder 3, dadurch gekennzeichnet, daß während der Laufzeit der normalen Belüftung über eine Dosiereinrichtung mengenproportional Fällungsmittel zur Phosphatelimination zugegeben werden.

5. Verfahren nach einem der Ansprüche 1 bis 4, dadurch gekennzeichnet, daß das zu reinigende Abwasser ohne Vorreinigung der Belebungskammer (110) zugeführt wird und daß erforderlichenfalls überschüssiges Abwasser von der Nachklärkammer (130) einem Auffangbehälter (150) zugeführt wird.

6. Verfahren nach einem der Ansprüche 1 bis 4, dadurch gekennzeichnet, daß das zu reinigende Abwasser zunächst einer Vorklärkammer (3, 4) zugeführt wird, ehe es in die Belebungskammer (10) gelangt.

7. Verfahren nach Anspruch 6, dadurch gekennzeichnet, daß Schwimmschlamm in der Nachklärkammer (15) abgezogen und der Vorklärkammer (3, 4) zugeführt wird.

8. Verfahren nach Anspruch 6 oder 7, dadurch gekennzeichnet, daß erforderlichenfalls überschüssiges Abwasser aus der Vorklärkammer (3, 4) einer Notüberlaufkammer (11) zugeführt wird.

## Claims

1. A process for biologically cleaning waste water using an integrated buffering, in which damming up of process stages takes place, comprising at least one activation tank (10) as well as one secondary settling tank (15) from which the cleaned waste water is discharged, said activation tank (10) having an aeration means and being fed with return sludge from said secondary settling tank (15), and a withdrawing means (21, 27, 30) for cleaned waste water having a level control including a switching element (35), and cleaned waste water being withdrawn from said secondary settling tank (15) in a manner made uniform, preferably uniformly over 24 hours, by means of said withdrawing means (21, 27, 30),
**characterized** in
that, with dropping water level, switching over from normal-condition aeration to rest-condition aeration takes place, in which longer pauses without aeration or shorter running periods of the aeration are selectively initiated due to said switching over.

2. The process of claim 1,
characterized in that by way of said pause intervals or running period intervals, respectively, of the basic load control, the oxygen content is reduced to zero and is held on this value until a predetermined denitrification has taken place.

3. The process of any of claims 1 or 2,
characterized in that, when the lower limit water level is reached, activated sludge is selectively withdrawn from one of said tanks (110, 120, 130) and is fed to a temporary storage means (not shown) for activated sludge.

4. The process of any one of claims 1, 2 or 3,
characterized in that, during the running time of the normal aeration, precipitating agents for phosphate elimination are added in proportional quantities via a metering means.

5. The process of any of claims 1 to 4,
characterized in that the waster water to be cleaned is fed to the activation tank (110) without precleaning step and that, if necessary, excess waste water from the secondary settling tank (130) is fed to a collecting basin (150).

6. The process of any of claims 1 to 4,
characterized in that the waste water to be cleaned is first fed to a presettling tank (3, 4) before it reaches the activation tank (10).

7. The process of claim 6,
characterized in that floating sludge in said secondary settling tank (15) is withdrawn and fed to said presettling tank (3, 4).

8. The process of claim 6 or 7,
characterized in that, if necessary, excess waste water is fed from the presettling tank (3, 4) to an emergency overflow tank (11).

## Revendications

1. Procédé d'épuration biologique d'eaux usées à système de tamponnage intégré dans lequel des étapes de procédé se succèdent, avec au moins une chambre d'épuration par bornes activées (10) ainsi qu'une chambre de décantation finale (15) avec soutirage de l'eau usée épurée, la chambre d'épuration par bornes activées (10) présentant un dispositif d'aérage et les boues de recyclage provenant de la chambre de décantation finale (15) lui étant renvoyées et un dispositif de soutirage (21, 27, 30) pour l'eau usée épurée présentant une régulation de niveau comprenant un élément de commutation (35) et l'eau usée épurée étant retirée de la chambre de décantation finale (15) de façon égalisée, de préférence constamment sur 24 heures au moyen du dispositif de soutirage (21, 27, 30),
caractérisé en ce que
lorsque le niveau de l'eau baisse une commutation de l'aérage normal à l'aérage de repos se produit, des interruptions plus longues sans aérage ou des temps de fonctionnement plus courts de l'aérage étant introduits par la commutation.

2. Procédé selon la revendication 1, caractérisé en ce que pendant les intervalles d'interruption respectivement les intervalles de fonctionnement de la régulation de la charge de base la teneur en oxygène est ramenée à zéro et est maintenue à cette valeur jusqu'à ce que une dénitrification prédéterminée ait eu lieu.

3. Procédé selon l'une des revendications 1 ou 2, caractérisé en ce que lorsque l'on atteint la limite inférieure du niveau de l'eau des bornes activées sont retirées au choix de l'une des chambres (110, 120, 130) et sont amenées à un réservoir intermédiaire (non représenté) de bornes activées.

4. Procédé selon l'une des revendications 1, 2 ou 3, caractérisé en ce que pendant la période de l'aérage normal des agents de précipitation pour l'élimination des phosphates sont ajoutés quantitativement proportionnellement par l'intermédiaire d'un dispositif de dosage.

5. Procédé selon l'une quelconque des revendications 1 à 4, caractérisé en ce que l'eau usée à épurer est amenée sans épuration préliminaire à la chambre d'épuration par boues activées (110) et en ce que l'eau usée en excès est si nécessaire amenée de la chambre de décantation finale (130) à un réservoir de collecte (150).

6. Procédé selon l'une quelconque des revendications 1 à 4, caractérisé en ce que l'eau usée à épurer est d'abord amenée à une chambre de clarification préliminaire (3, 4) avant qu'elle n'arrive dans la chambre d'épuration par bornes activées (10).

7. Procédé selon la revendication 6, caractérisé en ce que les boues surnageant dans la chambre de décantation finale (15) sont retirées et sont amenées à la chambre de clarification préliminaire (3, 4).

8. Procédé selon l'une des revendications 6 ou 7, caractérisé en ce que si nécessaire de l'eau usée en excès provenant de la chambre de clarification préliminaire (3, 4) est amenée à une chambre de trop-plein de secours (11).
